# EUROPEAN PATENT SPECIFICATION

(11) **EP 3 546 333 B1**
(45) Date of publication and mention of the grant of the patent: **17.11.2021**
(21) Application number: 19163339.5
(22) Date of filing: 18.03.2019
(51) Int. Cl.: B62M 7/12, B62K 11/10

(54) **POWER UNIT**
TRIEBWERK
UNITÉ D'ALIMENTATION

(30) Priority: 27.03.2018 JP 2018060897
(43) Date of publication of application: 02.10.2019
(73) Proprietor: Honda Motor Co., Ltd., Tokyo 107-8556 (JP)
(72) Inventor: Nakada, Naoki, Saitama, 351-0193 (JP); Wakita, Hiroyuki, Saitama, 351-0193 (JP)
(74) Representative: Beder, Jens

(56) References cited:
- EP-A1- 2 019 233
- EP-A1- 2 065 620
- EP-A2- 1 880 934
- JP-A- 2005 178 633
- JP-A- 2015 006 847

## Description

### [TECHNICAL FIELD]

The present invention relates to a power unit comprising: a gear mounted on a drive shaft of a rear wheel in a transmission case so as to rotate integrally with the drive shaft; and a speed detecting sensor having a detection tip end that faces the gear, having a coupling end coupled to a harness outside the transmission case, and detecting a rotation speed of the drive shaft.

### [BACKGROUND ART]

JP 2010 ― 076 604 A discloses a speed detecting sensor that has a coupling end coupled to a harness outside a transmission case and detects a rotation speed of a drive shaft. The transmission case has an outer surface on which a protection wall that projects at a position displaced rearward about an axis from the coupling end is integrally formed. The protection wall has a curved surface that curves so as to recede from the drive shaft as approaching the speed detecting sensor about the axis from a lower side of the drive shaft. Therefore, a U-shaped lock can avoid the coupling end of the speed detecting sensor by tracing the curved surface of the protection wall. Thus, even when a two-wheeled motor vehicle is moved when the U-shaped lock is mounted, a collision between the U-shaped lock and the speed detecting sensor can be avoided. The speed detecting sensor is reliably protected.

A swing-type power unit with the features of appended claim 1's preamble is known from EP 2 065 620 A1.

### [SUMMARY OF THE INVENTION]

### [PROBLEM TO BE SOLVED BY THE INVENTION]

However, with the disclosure described in JP 2010 ― 076 604 A, since the U-shaped lock gradually displaces in a centrifugal direction following the curved surface when the rear wheel rotates, a large-sized protection wall is inevitable, thus causing a weight increase in a transmission case. In addition, designability of the two-wheeled motor vehicle deteriorates in association with the large-sized protection wall.

The present invention has been made in view of the actual situation described above, and it is an object of the present invention to provide a power unit that ensures achieving a downsized protection wall that protects a coupling end of a speed detecting sensor.

### [MEANS TO SOLVE THE PROBLEMS]

In order to achieve the object, according to a first aspect of the present invention, there is provided a swing-type power unit for a saddle riding vehicle, with the features defined in claim 1.

According to a second aspect of the present invention, in addition to the first aspect, the protection wall is positioned rearward of a rear end of the speed detecting sensor about an axis of the drive shaft.

According to a third aspect of the present invention, in addition to the first aspect or the second aspect, there is provided the power unit, further comprising a sensor cover mounted on the outer surface of the transmission case, and housing the coupling end and the protection wall.

According to a fourth aspect of the present invention, in addition to any one of the first aspect to the third aspect, the harness extends upward from an upper end of the coupling end.

According to a fifth aspect of the present invention, in addition to any one of the first aspect to the fourth aspect, the fastening hole receiving a fastening bolt of the speed detecting sensor.

According to a sixth aspect of the present invention, in addition to any one of the first aspect to the fifth aspect, there is provided the power unit, further comprising a breather tube drawn out from the outer surface of transmission case in front of the speed detecting sensor so as to extend forward.

According to a seventh aspect of the present invention, in addition to the sixth aspect, the breather tube is disposed at a position displaced from the harness in the axial direction of the drive shaft.

According to an eighth aspect of the present invention, in addition to any of the first to seventh aspect, as seen in a projection plane perpendicular to the axis of the drive shaft, the protection wall extends to a position near the coupling end and is partly overlapped with the speed detecting sensor.

### [EFFECTS OF THE INVENTION]

With the first aspect, even though the rear wheel rotates when a U-shaped lock is mounted, the U-shaped lock collides with the protection wall at the position displaced from the coupling end of the speed detecting sensor, and thus, a collision between the U-shaped lock and the speed detecting sensor can be avoided. The speed detecting sensor is reliably protected. Moreover, the protection wall only receives the U-shaped lock about the axis of the drive shaft, thereby ensuring the downsized protection wall.

With the second aspect, even though the rear wheel rotates when the U-shaped lock is mounted, the U-shaped lock collides with the protection wall prior to the speed detecting sensor, thereby ensuring reliably protecting the speed detecting sensor.

With the third aspect, since the sensor cover covers the coupling end of the speed detecting sensor, the sensor cover can protect the speed detecting sensor from, for example, gravels splashed. In addition, since the sensor cover covers over the speed detecting sensor and the protection wall, designability of a saddle riding vehicle in which the power unit is incorporated can be properly maintained.

With the fourth aspect, since the harness extends upward from the coupling end of the speed detecting sensor, the interference between the protection wall and the harness can be avoided. The protection wall projects from the outer surface of the transmission case at the position displaced from the coupling end in the axial direction of the drive shaft. Thus, the protection wall can approach close to the coupling end of the speed detecting sensor as close as possible. An arrangement space can be reduced.

With the fifth aspect, the fastening bolt can be protected together with the speed detecting sensor from the U-shaped lock.

With the sixth aspect, the breather tube can be disposed without interfering with the speed detecting sensor and the protection wall.

With the seventh aspect, the breather tube can be disposed without interfering with the harness of the speed detecting sensor.

### [BRIEF DESCRIPTION OF THE DRAWINGS]

[FIG. 1] FIG. 1 is a side view schematically illustrating a scooter type two-wheeled motor vehicle according to one embodiment of a saddle riding vehicle.
[FIG. 2] FIG. 2 is a horizontal cross-sectional view of a power unit taken along a line 2-2 in FIG. 1.
[FIG. 3] FIG. 3 is a view along an arrow 3 in FIG. 1 and an enlarged view schematically illustrating an arrangement of a speed detecting sensor.
[FIG. 4] FIG. 4 is an enlarged perspective view schematically illustrating an outer surface of a transmission case on which the speed detecting sensor is disposed.
[FIG. 5] FIG. 5 is an enlarged plan view schematically illustrating the outer surface of the transmission case on which the speed detecting sensor is disposed.
[FIG. 6] FIG. 6 corresponds to FIG. 4, and is an enlarged perspective view schematically illustrating a sensor cover.
[FIG. 7] FIG. 7 is an enlarged side view schematically illustrating a relationship between a U-shaped lock and spokes when the U-shaped lock is mounted.

### [MODE FOR CARRYING OUT THE INVENTION]

The following describes one embodiment of the present invention with reference to the attached drawings. It should be noted that the following description defines respective directions of front and rear, up and down, and right and left as directions viewed from an occupant riding on a two-wheeled motor vehicle.

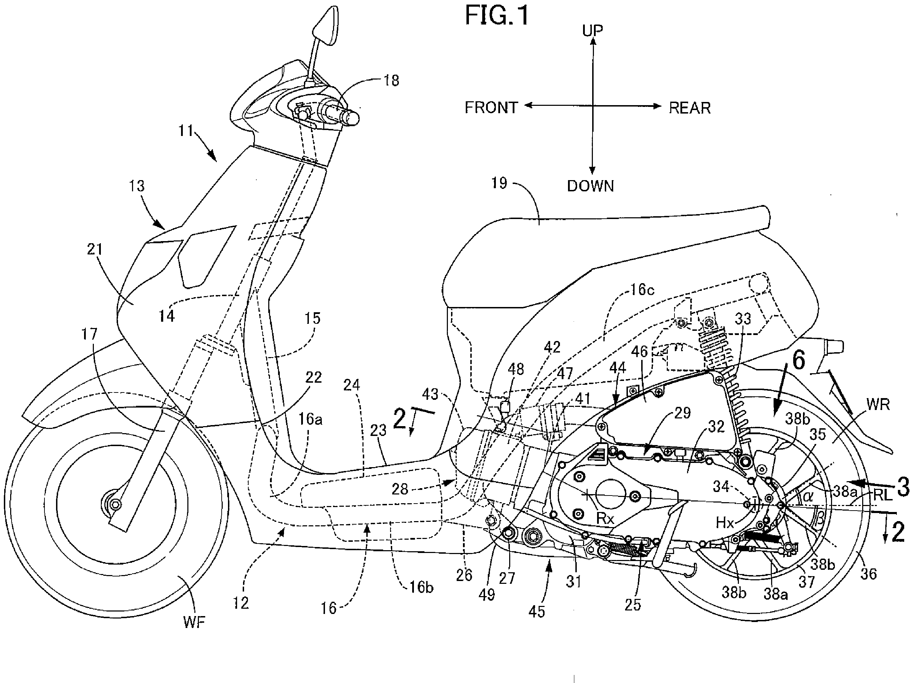

FIG. 1 schematically illustrates a scooter type two-wheeled motor vehicle according to one embodiment of a saddle riding vehicle. A two-wheeled motor vehicle 11 includes a body frame 12 and a vehicle body cover 13 mounted on the body frame 12. The body frame 12 includes a head tube 14, a down tube 15, and a pair of right and left side frames 16. The down tube 15 extends downward from the head tube 14. The side frames 16 extend rearward from a lower end of the down tube 15. The head tube 14 steerably supports a front fork 17 that supports a front wheel WF rotatably about an axle shaft, and a rod-shaped steering handlebar 18.

The side frame 16 has a down frame portion 16a, a lower frame portion 16b, and a seat rail portion 16c. The down frame portion 16a extends downward from a lower end of the down tube 15. The lower frame portion 16b extends in parallel with a ground from a rear end of the down frame portion 16a. The seat rail portion 16c extends upward to a rear from a rear end of the lower frame portion 16b to be disposed above a rear wheel WR. Above the seat rail portion 16c, an occupant seat 19 is mounted on the vehicle body cover 13.

The vehicle body cover 13 includes a front cover 21, a leg shield 22, and a step floor 23. The front cover 21 covers the head tube 14 from the front. The leg shield 22 is continuous with the front cover 21. The step floor 23 is continuous with a lower end of the leg shield 22 to be disposed above the lower frame portion 16b between the occupant seat 19 and the front wheel WF. An occupant seating on the occupant seat 19 can put his/her feet on the step floor 23. The lower frame portion 16b supports a fuel tank 24 storing a fuel under the step floor 23.

A unit swing-type power unit 25 is disposed in a space underneath the seat rail portion 16c. The power unit 25 is coupled to a bracket 26 swingably in a vertical direction via a link 27. The bracket 26 is combined to the rear end of the lower frame portion 16b. The power unit 25 has a rear end that rotatably supports the rear wheel WR about an axis Hx of a horizontal axis. The power unit 25 includes an internal combustion engine 28 and a transmission device 29. The internal combustion engine 28 generates a power based on a fuel supplied from the fuel tank 24. The transmission device 29 is coupled to the internal combustion engine 28 and transmits the power of the internal combustion engine 28 to the rear wheel WR at a gear ratio that linearly changes. The transmission case 32 of the transmission device 29 is combined to the crankcase 31 of the internal combustion engine 28.

A rear cushion unit 33 is disposed between the seat rail portion 16c and the power unit 25 at a position apart from the link 27 and the bracket 26. The power unit 25 functions as a suspension device that swingably couples the rear wheel WR to the body frame 12.

The rear wheel WR includes a hub 35, a rim 37, and a plurality of spokes 38a, 38b. The hub 35 is combined to the drive shaft 34 and expands rearward with respect to the transmission case 32. The rim 37 is disposed coaxially with the hub 35 and supports a tire 36 made of rubber. The plurality of spokes 38a, 38b couple the rim 37 to the hub 35. The spokes 38a, 38b form pairs of a front spoke 38a and a rear spoke 38b. The front spoke 38a inclines in a direction of forward movement at a prescribed angle α with respect to a diameter line RL about the drive shaft 34. The rear spoke 38b inclines in a retreat direction at a prescribed angle β with respect to the diameter line RL about the drive shaft 34. The hub 35, rim 37, and spokes 38a, 38b are integrally molded from a metallic material, such as aluminum.

The internal combustion engine 28 includes a crankcase 31, a cylinder block 41, a cylinder head 42, and a head cover 43. The crankcase 31 supports a crankshaft (described below) rotatably about a rotation axis Rx extending in parallel with the axis Hx of the rear wheel WR. The cylinder block 41 is combined to the crankcase 31. The cylinder head 42 is combined to the cylinder block 41. The head cover 43 is combined to the cylinder head 42. An intake device 44 and an exhaust device 45 are coupled to the cylinder head 42. The intake device 44 includes an air cleaner 46 and a throttle body 47. The air cleaner 46 is supported by the transmission case 32 and suctions and purifies an external air. The throttle body 47 couples the air cleaner 46 to the cylinder head 42. The cylinder head 42 has an upper wall on which a fuel injection device 48 is mounted. The exhaust device 45 includes an exhaust pipe 49 and an exhaust muffler (not illustrated). The exhaust pipe 49 extends rearward through underneath the internal combustion engine 28 from a lower wall of the cylinder head 42. The exhaust muffler is coupled to a downstream end of the exhaust pipe 49 to be coupled to the crankcase 31.

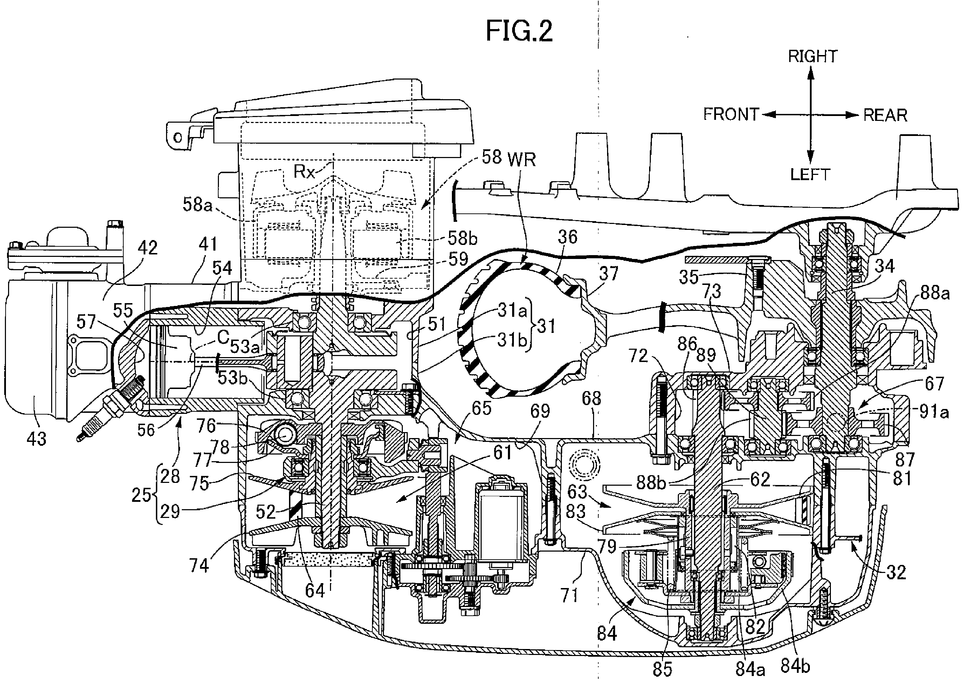

As illustrated in FIG. 2, the crankcase 31 is divided into a first case half body 31a and a second case half body 31b. The first case half body 31a and the second case half body 31b collaborate to partition a crank chamber 51. The crank chamber 51 houses a crank of a crankshaft 52. A bearing 53a that rotatably supports the crankshaft 52 is assembled to the first case half body 31a. A bearing 53b that rotatably supports the crankshaft 52 is assembled to the second case half body 31b.

In the cylinder block 41, a cylinder bore 54 is partitioned. In the cylinder bore 54, a piston 55 is engaged slidably along a cylinder axis C. The piston 55 is coupled to the crank of the crankshaft 52 with a connecting rod 56. A linear reciprocation motion of the piston 55 is transformed into a rotational motion of the crankshaft 52. The cylinder axis C inclines slightly upward to a front from the horizon. A combustion chamber 57 is partitioned between the piston 55 and the cylinder head 42. An air-fuel mixture is introduced into the combustion chamber 57 via the intake device 44. An exhaust gas inside the combustion chamber 57 is discharged via the exhaust device 45.

The crankshaft 52 has one end to which an AC generator (ACG) 58 is coupled. The AC generator 58 includes a pipe shaped rotor 58a and a stator 58b. The rotor 58a is secured to the one end of the crankshaft 52 projecting from an outer surface of the first case half body 31a. The stator 58b is disposed around the crankshaft 52 surrounded by the rotor 58a. The stator 58b is configured of a plurality of coils individually wound around a stator core. The stator 58b is secured to a support plate 59 fastened to the first case half body 31a. The AC generator 58 generates electricity in response to relative rotation of the rotor 58a and the stator 58b.

The transmission device 29 includes a belt type continuously variable transmission (hereinafter referred to as "transmission") 65 and a deceleration gear mechanism 67. The transmission 65 includes a drive pulley 61 and a V belt 64 to steplessly shift a rotative power transmitted from the crankshaft 52. The drive pulley 61 is housed within the transmission case 32 and mounted to the crankshaft 52 projecting from an outer surface of the second case half body 31b. The V belt 64 is wound around a driven pulley 63 mounted to a driven shaft 62. The deceleration gear mechanism 67 is housed within the transmission case 32, and decelerates and transmits the rotative power of the transmission 65 to the drive shaft 34 of the rear wheel WR.

The transmission case 32 includes a case entity 68, a case cover 71, and a gear cover 73. The case entity 68 is continuous with the second case half body 31b of the crankcase 31. The case cover 71 is fastened to the case entity 68 and partitions a transmission chamber 69 that houses the transmission 65 between the case cover 71 and the case entity 68. The gear cover 73 is fastened to the case entity 68 and partitions a gear chamber 72 between the gear cover 73 and the case entity 68. The gear chamber 72 houses the deceleration gear mechanism 67.

The drive pulley 61 includes a pulley half body 74 and a pulley half body 75. The pulley half body 74 is secured coaxially to the crankshaft 52 and has a conical-shaped inward surface. The pulley half body 75 is supported coaxially to the crankshaft 52 movably in an axial direction of the crankshaft 52 and has a conical-shaped inward surface that is caused to face the inward surface of the pulley half body 74. The V belt 64 is wound around between the inward surface of the pulley half body 74 and the inward surface of the pulley half body 75. The pulley half body 75 is disposed between the second case half body 31b of the crankcase 31 and the pulley half body 74.

A cam plate 77 is secured to the pulley half body 75. The cam plate 77 is caused to face a weight holding member 76 secured to the crankshaft 52 in a non-displaceable manner in the axial direction. A centrifugal weight 78 is interposed between the cam plate 77 and the weight holding member 76. The cam plate 77 recedes from the pulley half body 74 as receding from the rotation axis Rx of the crankshaft 52 in a centrifugal direction. The centrifugal force is generated in the centrifugal weight 78 in association with a rotation of the crankshaft 52. As the centrifugal weight 78 displaces in the centrifugal direction while the centrifugal weight 78 rolling contacts the cam plate 77, the pulley half body 75 is driven toward the pulley half body 74. Thus, the pulley half body 75 moves toward the pulley half body 74 in the axial direction in response to the rotation of the crankshaft 52, and thus, a winding radius of the V belt 64 changes.

The driven pulley 63 includes an inner pipe 79, a pulley half body 81, an outer pipe 82, and a pulley half body 83. The inner pipe 79 has a cylindrical shape coaxial with the driven shaft 62 to be coaxially mounted on the driven shaft 62. The pulley half body 81 is secured to the inner pipe 79 so as to be coaxial with the inner pipe 79. The outer pipe 82 has a cylindrical shape coaxial with the driven shaft 62 to be coaxially mounted on the inner pipe 79. The pulley half body 83 is secured to the outer pipe 82 so as to be coaxial with the outer pipe 82, and has an inward surface that faces an inward surface of the pulley half body 81. The V belt 64 is wound around between the inward surface of the pulley half body 81 and the inward surface of the pulley half body 83. The inner pipe 79 is relatively rotatably supported by the driven shaft 62. The outer pipe 82 is supported relatively rotatably and relatively displaceably in the axial direction by the inner pipe 79. In response to the relative displacement in the axial direction of the outer pipe 82 and the inner pipe 79, the pulley half body 83 approaches the pulley half body 81 and recedes from the pulley half body 81.

On the driven shaft 62, a centrifugal clutch 84 is mounted. The centrifugal clutch 84 includes a clutch plate 84a and an outer plate 84b. The clutch plate 84a is secured to the inner pipe 79. The outer plate 84b is secured to the driven shaft 62 and caused to face the clutch plate 84a. Between the clutch plate 84a and the pulley half body 83, a coiled spring 85 is disposed. The coiled spring 85 provides an elastic force to press the pulley half body 83 toward the pulley half body 81. When the winding radius of the V belt 64 increases on the drive pulley 61, the pulley half body 83 recedes from the pulley half body 81 against the elastic force of the coiled spring 85, and the winding radius of the V belt 64 decreases on the driven pulley 63. When the clutch plate 84a rotates, the outer plate 84b is combined to the clutch plate 84a by an action of the centrifugal force. Thus, a rotation of the driven pulley 63 is transmitted to the driven shaft 62. As soon as the engine speed exceeds a set rotation speed, the centrifugal clutch 84 establishes a power transmission state.

The deceleration gear mechanism 67 includes a drive gear 86, a final gear 87, and transmission gears 88a, 88b. The drive gear 86 is secured to the driven shaft 62 protruding to the gear chamber 72. The final gear 87 is secured to the drive shaft 34 of the rear wheel WR to rotate integrally with the drive shaft 34. The transmission gears 88a, 88b are disposed between the drive gear 86 and the final gear 87. The transmission gears 88a, 88b are secured to a shared intermediate shaft 89. The drive gear 86 engages with the transmission gear 88a, and the final gear 87 engages with the transmission gear 88b. Thus, the rotation of the driven shaft 62 is decelerated and transmitted to the drive shaft 34 of the rear wheel WR.

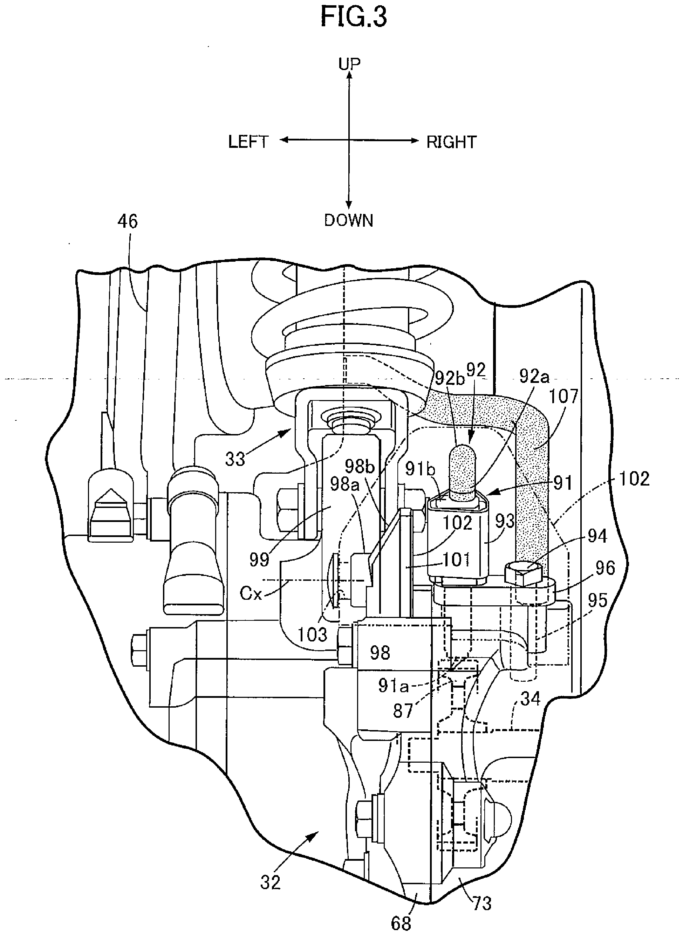

As illustrated in FIG. 3, on the transmission case 32, a speed detecting sensor 91 is mounted. The speed detecting sensor 91 faces the final gear 87 with a detection tip end 91a entering the gear chamber 72 to detect a rotation speed of the drive shaft 34. The speed detecting sensor 91 has a coupling end 91b coupled to a harness 92 outside the transmission case 32. The coupling end 91b projects outside the transmission case 32 by standing upright from an outer surface of the transmission case 32. For the speed detecting sensor 91, it is used one that uses a magnetoresistive element that transforms a magnitude of a magnetic force into an electrical signal according, for example, to presence/absence of teeth of a magnetic material. A detection signal of the speed detecting sensor 91 is supplied to, for example, an electronic control unit (ECU), which is not illustrated, through the harness 92.

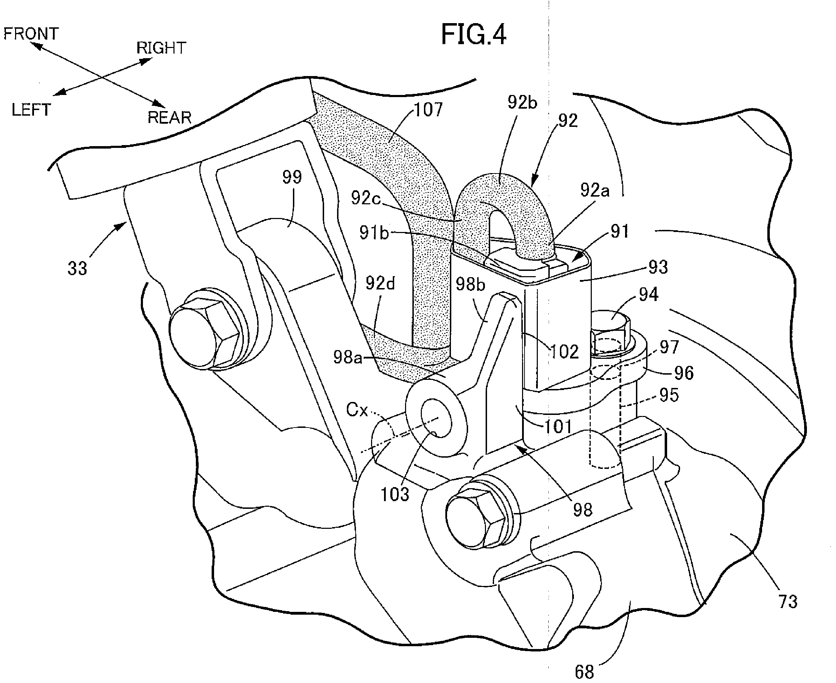

As illustrated in FIG. 4, the harness 92 has a first linear region 92a, a folded back region 92b, a second linear region 92c, and a non-restrained region 92d. The first linear region 92a extends upward from an upper end of the coupling end 91b to recede from the outer surface of the transmission case 32. The folded back region 92b is continuous with the first linear region 92a and curves so as to be folded back downward toward the outer surface of the transmission case 32. The second linear region 92c is continuous with the folded back region 92b and approach the outer surface of the transmission case 32 along a side surface of the coupling end 91b. The non-restrained region 92d is continuous with the second linear region 92c and extends forward along the outer surface of the transmission case 32. The second linear region 92c is fastened to the side surface of the coupling end 91b with a band 93 made of resin. Thus, a configuration of the harness 92 is restrained by the band 93.

The gear cover 73 of the transmission case 32 has a fastening hole 95 formed at a position displaced from the coupling end 91b in the axial direction of the drive shaft 34. The fastening hole 95 receives a fastening bolt 94 of the speed detecting sensor 91. A mounting piece 96 that is stacked over an outer surface of the gear cover 73 is secured to the speed detecting sensor 91. The mounting piece 96 has a through hole 97 formed to receive the fastening bolt 94 coaxially to the fastening hole 95. The fastening bolt 94 exits the through hole 97 to be screwed into the fastening hole 95. The speed detecting sensor 91 is secured to the gear cover 73 of the transmission case 32 with the fastening bolt 94.

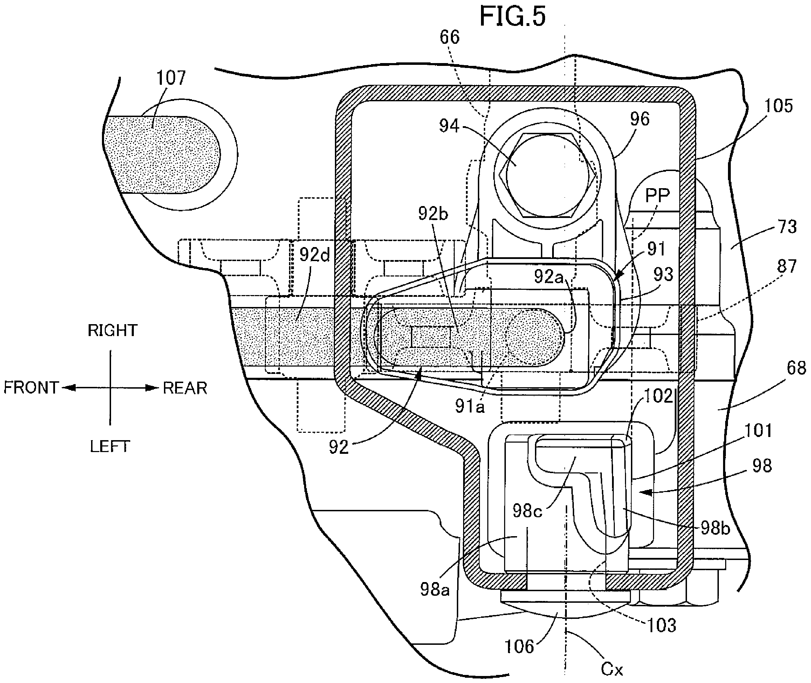

The case entity 68 of the transmission case 32 has a protection wall 98 integrally formed at a position displaced from the coupling end 91b of the speed detecting sensor 91 in the axial direction of the drive shaft 34. The protection wall 98 projects from the outer surface of the transmission case 32. The fastening hole 95, speed detecting sensor 91, and protection wall 98 are collocated in this order from a side (inner side of a vehicle) of the hub 35 of the rear wheel WR in the axial direction of the drive shaft 34. In the case entity 68 of the transmission case 32, a bracket 99 is integrally formed. The bracket 99 supports a lower end of the rear cushion unit 33 rotatably about a rotation axis parallel to an axial center of the drive shaft 34. The protection wall 98 is disposed at a rear of the bracket 99. As illustrated in FIG. 5, the protection wall 98 includes a columnar shaped base 98a, a wall body 98b, and a reinforcing wall 98c. The base 98a is continuous with the case entity 68 and has an axis Cx parallel to an axial center of the drive shaft 34. The wall body 98b is integrated with a rear end of the base 98a while being continuous with the case entity 68 and specifies an upright surface 101 in a planar surface parallel to the axial center of the drive shaft 34. The reinforcing wall 98c extends along a virtual plane perpendicular to the axial center of the drive shaft 34 while being continuous with an inward surface of the base 98a and is integrated with the wall body 98b on a ridgeline 102 standing upright from the outer surface of the transmission case 32. The ridgeline 102 of the wall body 98b and the reinforcing wall 98c has a height as high as the coupling end 91b of the speed detecting sensor 91. The protection wall 98 has a rear end (virtual plane PP including the upright surface 101) that is positioned at a rear with respect to a rear end of the speed detecting sensor 91 about the axis of the drive shaft 34. A screw hole 103 coaxial with the axis Cx is drilled on the base 98a of the protection wall 98. In the screw hole 103, a thread groove for a female screw is threaded.

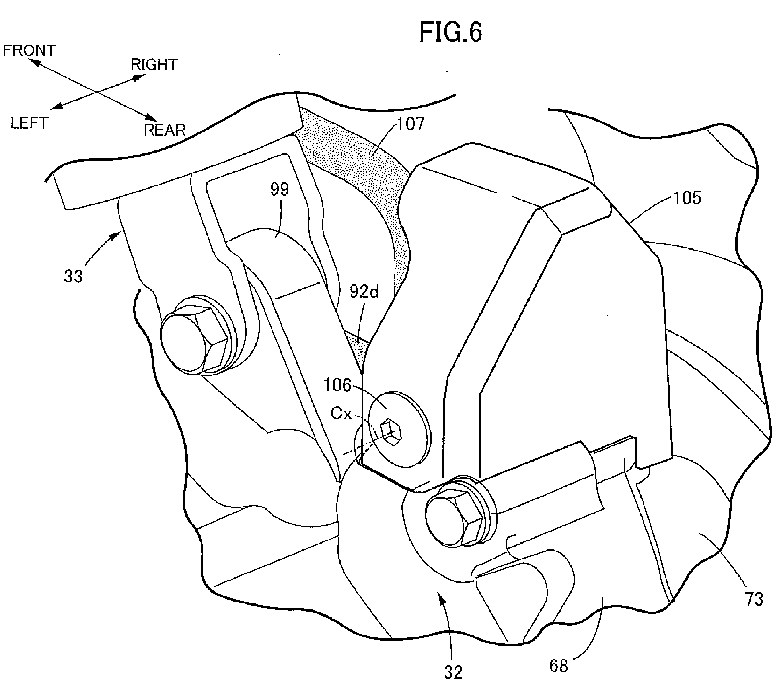

As illustrated in FIG. 6, a sensor cover 105 that houses the coupling end 91b of the speed detecting sensor 91 and the protection wall 98 is mounted on the outer surface of the transmission case 32. The sensor cover 105 is secured to the transmission case 32 with a screw member 106. The screw member 106 is screwed into the screw hole 103 formed in the base 98a of the protection wall 98 as described above. The sensor cover 105 is molded from, for example, a resin material.

A breather tube 107 is mounted on the gear cover 73 of the transmission case 32. The breather tube 107 is drawn out from the outer surface of the transmission case 32 in front of the speed detecting sensor 91 and extends forward. The breather tube 107 is disposed at a position displaced from the harness 92 in the axial direction of the drive shaft 34. The breather tube 107 extends forward in parallel with the non-restrained region 92d of the harness 92.

Next, a description will be given of an operation of the power unit 25 according to the embodiment. Repeated strokes of air intake, compression, combustion, and exhaustion in the combustion chamber 57 cause the piston 55 to make the linear reciprocation motion within the cylinder bore 54, thus causing the rotation of the crankshaft 52. The rotation of the drive pulley 61 is transmitted to the driven pulley 63 by an action of the V belt 64. As soon as the engine speed exceeds the set rotation speed, the centrifugal clutch 84 establishes the power transmission state, and thus, the rotation of the driven pulley 63 is transmitted to the driven shaft 62. The rotation of the driven shaft 62 is transmitted from the drive gear 86 to the final gear 87 via the transmission gears 88a, 88b. Thus, the drive shaft 34 of the rear wheel WR rotates. When the rotation speed of the drive pulley 61 increases, the centrifugal weight 78 displaces radially outward and the winding radius of the V belt 64 increases. The winding radius of the driven pulley 63 decreases according to the winding radius of the drive pulley 61. Thus, the transmission 65 steplessly shifts a gear ratio.

The speed detecting sensor 91 detects a rotation speed of the final gear 87 according to the presence/absence of the teeth of the final gear 87. Since the rear wheel WR and the final gear 87 are secured to the drive shaft 34 in a relatively unrotatable manner, the rotation speed of the final gear 87 reflects a travelling speed of the two-wheeled motor vehicle 11. Thus, the speed detecting sensor 91 detects the travelling speed of the two-wheeled motor vehicle 11. The travelling speed is, for example, displayed on a speedometer.

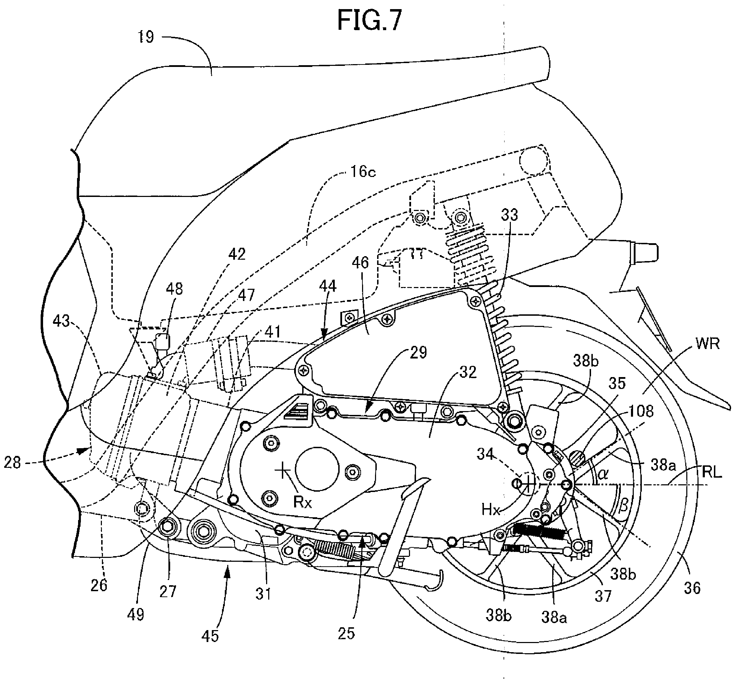

As illustrated in FIG. 7, when a shaft body 108 of a U-shaped lock is mounted on the rear wheel WR, the shaft body 108 of the U-shaped lock collides with the wall body 98b of the protection wall 98 at a position displaced from the coupling end 91b of the speed detecting sensor 91 when the two-wheeled motor vehicle 11 moves forward and the rear wheel WR rotates, and thus, a collision between the U-shaped lock and the speed detecting sensor 91 is avoided. When the shaft body 108 of the U-shaped lock is installed in a front side of the front spoke 38a in the direction of forward movement about the drive shaft 34, the shaft body 108 of the U-shaped lock is interposed between the front spoke 38a and the upright surface 101 of the wall body 98b because an outer periphery of the hub 35 and the front spoke 38a intersect at an acute angle. Therefore, a movement of the U-shaped lock is restrained. The speed detecting sensor 91 is reliably protected. Moreover, the protection wall 98 only receives the U-shaped lock about the axis of the drive shaft 34, and thus, the protection wall 98 is downsized. When the shaft body 108 of the U-shaped lock is installed in a front side of the rear spoke 38b in the direction of forward movement about the drive shaft 34, while the shaft body 108 of the U-shaped lock is restrained in the direction of forward movement about the drive shaft 34 by an action of the protection wall 98, an action of a cam of the rear spoke 38b ensures a radially outward displacement because the outer periphery of the hub 35 and the rear spoke 38b intersect at an obtuse angle. Thus, the rear spoke 38b can go over a top end of the wall body 98b. The U-shaped lock is caused to escape radially outward, thereby reducing an impact of the U-shaped lock. The speed detecting sensor 91 is reliably protected.

In particular, since the wall body 98b of the protection wall 98 is positioned at a rear with respect to a rear end of the speed detecting sensor 91 about the axis of the drive shaft 34, even though the rear wheel WR rotates when the U-shaped lock is mounted, the U-shaped lock collides with the protection wall 98 prior to the speed detecting sensor 91, thereby reliably protecting the speed detecting sensor 91.

In this embodiment, the sensor cover 105, which houses the coupling end 91b of the speed detecting sensor 91 and the protection wall 98, is mounted on the outer surface of the transmission case 32. Since the sensor cover 105 covers the coupling end 91b of the speed detecting sensor 91, the sensor cover 105 protects the speed detecting sensor 91 from, for example, gravels splashed. In addition, since the sensor cover 105 covers over the speed detecting sensor 91 and the protection wall 98, designability of the two-wheeled motor vehicle 11 in which the power unit 25 is incorporated is properly maintained.

The first linear region 92a of the harness 92 extends upward from the upper end of the coupling end 91b of the speed detecting sensor 91 standing upright from the outer surface of the transmission case 32. The harness 92 thus extending upward from the coupling end 91b of the speed detecting sensor 91 avoids the interference between the protection wall 98 and the harness 92. The protection wall 98 projects from the outer surface of the transmission case 32 at the position displaced from the coupling end 91b in the axial direction of the drive shaft 34. The protection wall 98 can approach close to the coupling end 91b of the speed detecting sensor 91 as close as possible. An arrangement space is reduced.

The transmission case 32 has the fastening hole 95, which receives the fastening bolt 94 of the speed detecting sensor 91, formed at the position displaced from the coupling end 91b of the speed detecting sensor 91 in the axial direction of the drive shaft 34. The speed detecting sensor 91 is secured to the gear cover 73 of the transmission case 32 with the fastening bolt 94 screwed into the fastening hole 95. The action of the protection wall 98 ensures protecting the fastening bolt 94 together with the speed detecting sensor 91 from the U-shaped lock.

On the transmission case 32, the breather tube 107 is mounted. The breather tube 107 is drawn out from the outer surface of the transmission case 32 in front of the speed detecting sensor 91 and extends forward. Thus, the breather tube 107 is disposed without interfering the speed detecting sensor 91 and the protection wall 98. Moreover, since the breather tube 107 is disposed at the position displaced from the harness 92 in the axial direction of the drive shaft 34, the breather tube 107 is disposed without interfering with the harness 92 of the speed detecting sensor 91.

### [DESCRIPTION OF REFERENCE NUMERALS AND SYMBOLS]

- 25: Power unit
- 32: Transmission case
- 34: Drive shaft (of rear wheel)
- 87: Gear (final gear)
- 91: Speed detecting sensor
- 91a: Detection tip end
- 91b: Coupling end
- 92: Harness
- 94: Fastening bolt
- 95: Fastening hole
- 98: Protection wall
- 105: Sensor cover
- 107: Breather tube
- WR: Rear wheel

## Claims

1. A swing-type power unit (25) for a saddle riding vehicle, the power unit (25) comprising:
an internal combustion engine (28),
a transmission device (29),
a transmission case (32) of the transmission device (29) being combined to a crankcase (31) of the internal combustion engine (28), a final gear (87) mounted on a drive shaft (34) of a rear wheel (WR) in the transmission case (32) so as to rotate integrally with the drive shaft (34); and
a speed detecting sensor (91) being mounted on the transmission case (32),
and having a coupling end (91b) coupled to a harness (92) outside the transmission case (32), and configured to detect a rotation speed of the drive shaft (34),
the coupling end (91b) projects outside the transmission case (32) by standing upright from an outer surface of the transmission case (32), and
the transmission case (32) has a protection wall (98) integrally formed at a position displaced from the coupling end (91b) in an axial direction of the drive shaft (34), wherein the protection wall (98) projects from an outer surface of the transmission case (32),
**characterized in that** the speed detecting sensor (91) having a detection tip end (91a) that faces the final gear (87), and with the detection tip end (91a) entering a gear chamber (72),
the transmission case (32) has a fastening hole (95) formed at a position displaced from the coupling end (91b) in the axial direction of the drive shaft (34), and
the fastening hole,
the speed detecting sensor (91) and the protection wall (98) are collocated in this order from a side of a hub (35) of the rear wheel (WR) in the axial direction of the drive shaft (34).

2. The power unit according to claim 1,
wherein the protection wall (98) is positioned rearward of a rear end of the speed detecting sensor (91) about an axis of the drive shaft (34).

3. The power unit according to claim 1 or 2, further comprising
a sensor cover (105) mounted on the outer surface of the transmission case (32), and housing the coupling end (91b) and the protection wall (98).

4. The power unit according to any one of claims 1 to 3,
wherein the harness (92) extends upward from an upper end of the coupling end (91b).

5. The power unit according to any one of claims 1 to 4, the fastening hole (95) receiving a fastening bolt (94) of the speed detecting sensor (91).

6. The power unit according to any one of claims 1 to 5, further comprising
a breather tube (107) drawn out from the outer surface of transmission case (32) in front of the speed detecting sensor (91) so as to extend forward.

7. The power unit according to claim 6,
wherein the breather tube (107) is disposed at a position displaced from the harness (92) in the axial direction of the drive shaft (34).

## Patentansprüche

1. Schwenkbare Antriebseinheit (25) für ein Fahrzeug vom Satteltyp, wobei die Antriebseinheit (25) aufweist:
einen Verbrennungsmotor (28),
eine Getriebevorrichtung (29),
wobei ein Getriebegehäuse (32) der Getriebevorrichtung (29) mit einem Kurbelgehäuse (31) des Verbrennungsmotors (28) kombiniert ist,
ein letztes Zahnrad (87), das auf einer Antriebswelle (34) eines Hinterrads (WR) in dem Getriebegehäuse (32) so eingebaut ist, dass es sich gemeinsam mit der Antriebswelle (34) dreht; und
einen Geschwindigkeitserfassungssensor (91), der an dem Getriebegehäuse (32) angebracht ist und ein Kopplungsende (91b) aufweist, das außerhalb des Getriebegehäuses (32) mit einem Kabelbaum (92) gekoppelt ist, und so ausgebildet ist, dass er eine Rotationsgeschwindigkeit der Antriebswelle (34) erfasst,
das Kupplungsende (91b) aus dem Getriebegehäuse (32) herausragt, indem es aufrecht von einer Außenfläche des Getriebegehäuses (32) absteht, und
das Getriebegehäuse (32) eine Schutzwand (98) aufweist, die einstückig an einer Stelle ausgebildet ist, die von dem Kopplungsende (91b) in einer axialen Richtung der Antriebswelle (34) versetzt ist, wobei die Schutzwand (98) von einer Außenfläche des Getriebegehäuses (32) vorsteht,
**dadurch gekennzeichnet, dass**
der Geschwindigkeitserfassungssensor ist (91) ein Erfassungsspitzenende (91a) hat, das dem letzten Zahnrad (87) gegenüberliegt, und mit dem Erfassungsspitzenende (91a) in eine Getriebekammer (72) eindringt,
das Getriebegehäuse (32) ein Befestigungsloch (95) hat, dass an einer Position beabstandet von dem Kopplungsende (91b) in der axialen Richtung der Antriebswelle (34) gebildet ist, und
das Befestigungsloch, der Geschwindigkeitserfassungssensor (91) und die Schutzwand (98) in dieser Reihenfolge von einer Seite einer Nabe (35) des Hinterrades (WR) in der axialen Richtung der Antriebswelle (34) angeordnet sind.

2. Antriebseinheit nach Anspruch 1,
wobei die Schutzwand (98) hinter einem hinteren Ende des
Geschwindigkeitserfassungssensors (91) um eine Achse der Antriebswelle (34) angeordnet ist.

3. Antriebseinheit nach Anspruch 1 oder 2, ferner aufweisend
eine Sensorabdeckung (105), die an der Außenfläche des Getriebegehäuses (32) angebracht ist und das Kupplungsende (91b) und die Schutzwand (98) aufnimmt.

4. Antriebseinheit nach einem der Ansprüche 1 bis 3,
wobei sich der Kabelbaum (92) von einem oberen Ende des Kopplungsendes (91b) nach oben erstreckt.

5. Antriebseinheit nach einem der Ansprüche 1 bis 4,
wobei das Befestigungsloch (95) einen Befestigungsbolzen (94) des Geschwindigkeitserfassungssensors (91) aufnimmt.

6. Antriebseinheit nach einem der Ansprüche 1 bis 5, ferner aufweisend
ein Entlüftungsrohr (107), das sich ausgehend von der Außenfläche des Getriebegehäuses (32) vor dem Geschwindigkeitserfassungssensor (91) nach vorne erstreckt.

7. Antriebseinheit nach Anspruch 6,
wobei das Entlüftungsrohr (107) an einer gegenüber dem Kabelbaum (92) in axialer Richtung der Antriebswelle (34) versetzten Position angeordnet ist.

## Revendications

1. Unité motrice (25) de type oscillant pour un véhicule à selle, l'unité motrice (25) comprenant :
un moteur à combustion interne (28),
un dispositif de transmission (29),
un carter de transmission (32) du dispositif de transmission (29), qui est combiné à un carter moteur (31) du moteur à combustion interne (28),
un pignon final (87) monté sur un arbre d'entraînement (34) d'une roue arrière (WR) dans le carter de transmission (32) de sorte à tourner solidairement avec l'arbre d'entraînement (34) ; et
un capteur de détection de vitesse (91) qui est monté sur le carter de transmission (32), et ayant une extrémité de couplage (91b) couplée à un harnais (92) à l'extérieur du carter de transmission (32), et configuré pour détecter une vitesse de rotation de l'arbre d'entraînement (34),
l'extrémité de couplage (91b) fait saillie à l'extérieur du carter de transmission (32) en se tenant droit depuis une surface extérieure du carter de transmission (32), et
le carter de transmission (32) a une paroi de protection (98) formée solidairement à une position décalée de l'extrémité de couplage (91b) dans une direction axiale de l'arbre d'entraînement (34), dans laquelle la paroi de protection (98) fait saillie depuis une surface extérieure du carter de transmission (32), **caractérisée en ce que** le capteur de détection de vitesse (91) a une extrémité de pointe de détection (91a) qui fait face au pignon final (87), l'extrémité de pointe de détection (91a) entrant dans une chambre d'engrenage (72),
le carter de transmission (32) a un trou de fixation (95) formé à une position décalée de l'extrémité de couplage (91b) dans la direction axiale de l'arbre d'entraînement (34), et le trou de fixation, le capteur de détection de vitesse (91) et la paroi de protection (98) sont situés au même endroit dans cet ordre depuis un côté d'un moyeu (35) de la roue arrière (WR) dans la direction axiale de l'arbre d'entraînement (34).

2. Unité motrice selon la revendication 1,
dans laquelle la paroi de protection (98) est positionnée en arrière d'une extrémité arrière du capteur de détection de vitesse (91) autour d'un axe de l'arbre d'entraînement (34).

3. Unité motrice selon la revendication 1 ou 2, comprenant en outre
un couvercle de capteur (105) monté sur la surface extérieure du carter de transmission (32), et abritant l'extrémité de couplage (91b) et la paroi de protection (98).

4. Unité motrice selon l'une quelconque des revendications 1 à 3,
dans laquelle le harnais (92) s'étend vers le haut depuis une extrémité supérieure de l'extrémité de couplage (91b).

5. Unité motrice selon l'une quelconque des revendications 1 à 4,
le trou de fixation (95) recevant un boulon de fixation (94) du capteur de détection de vitesse (91).

6. Unité motrice selon l'une quelconque des revendications 1 à 5, comprenant en outre
un tube reniflard (107) tiré de la surface extérieure du carter de transmission (32) devant le capteur de détection de vitesse (91) de sorte à s'étendre vers l'avant.

7. Unité motrice selon la revendication 6,
dans laquelle le tube reniflard (107) est disposé à une position décalée du harnais (92) dans la direction axiale de l'arbre d'entraînement (34).
